# EUROPÄISCHE PATENTANMELDUNG

(11) **EP 1 382 932 A1**
(43) Veröffentlichungstag der Anmeldung: **21.01.2004**
(21) Anmeldenummer: 03014225.1
(22) Anmeldetag: 25.06.2003
(51) Int. Cl.: F41H 7/04, B60N 2/42

(54) **Geschütztes Personenfahrzeug oder -aufenthaltsraum**

(30) Priorität: 17.07.2002 DE 20210749 U
(71) Anmelder: Drehtainer Technologie Transfer GmbH, 25469 Halstenbek (DE)
(72) Erfinder: Meyer, Helmut, 25469 Halstenbek (DE)
(74) Vertreter: DIEHL GLAESER HILTL & PARTNER

(57) **Zusammenfassung**

Die Erfindung bezieht sich auf ein mit Sitzgelegenheiten ausgestattetes Militärpersonenfahrzeug oder -aufenthaltsraum in der Form eines Frachtcontainers für den Einsatz in Gebieten, in denen Minen oder dgl. zu befürchten sind. Wände, Boden und Decke sind mit Mitteln ausgestattet, die der Druckwelle einer Detonation durch Formänderungsarbeit Energie entziehen.

## Beschreibung

Die Erfindung bezieht sich auf ein mit Sitzgelegenheiten ausgestattetes Militärpersonenfahrzeug oder -aufenthaltsraum in der Form eines Frachtcontainers für den Einsatz in Gebieten, in denen Minen oder dgl. zu befürchten sind, wobei Wände, Boden und Decke mit Mitteln ausgestattet sind, die der Druckwelle einer Detonation durch Formänderungsarbeit Energie entziehen.

Beim Personentransport in Gebieten, in denen Sprengminen zu befürchten sind, werden gegenüber Druckwellen geschützte Container als gepanzerte Fahrzeuge eingesetzt (DE 198 42 629 C1), wenngleich sich diese nicht ausreichend bewährt haben, und zwar auch, wenn sie mit Wand-, Boden- und Deckenauskleidungen ausgebildet sind, die sich unter Druckeinwirkung verformen und so einer Druckwelle den größten Teil ihrer Energie nehmen. Bei einem derartig ausgestatteten Fahrzeug ist nicht zu verhindern, dass durch eine Mine eine derartig starke Druckwelle erzeugt wird, dass deren Kräfte unterhalb des Sitzes angreifen und den Sitz mit der darauf befindlichen Person so beschleunigen können, dass die Person ernsthaft verletzt wird.

Die Erfindung will hier Abhilfe schaffen, was durch ein Fahrzeug bzw. einen Aufenthaltsraum der eingangs genannten Art dadurch erreicht wird, dass eine mehrteilige Hängevorrichtung für den Sitz vorgesehen ist, die aus drei oder vier oder mehr vertikal straff gespannten Seiten gebildet ist, die jeweils am Dach und am Boden befestigt sind und am Sitz oder am Fußteil des Sitzes befestigt und geführt sind.

Bei der vorliegenden Erfindung wird das Problem der Schocksicherheit durch die Aufhängung eines Sitzes an Seilen gelöst, und es liegt auf der Hand, dass auf diesem Wege erreicht werden kann, dass die Wirkung von Detonationen, die sich am Boden oder am Dach eines Fahrzeuges bemerkbar machen können, nicht unmittelbar auf eine Person übertragen werden, die sich auf einem derart aufgehängten Sitz befindet.

Die Erfindung wird nachstehend anhand der Zeichnungen beispielsweise erläutert.
- Figur 1: zeigt eine vertikale Vorderansicht eines Sitzes in einem Fahrzeug gemäß der Erfindung.
- Figur 2: zeigt eine Querschnittsansicht durch den oberen Bereich des in Figur 1 gezeigten Sitzes.
- Figur 3: zeigt eine Querschnittsansicht durch den unteren Teil des in Figur 1 gezeigten Sitzes.

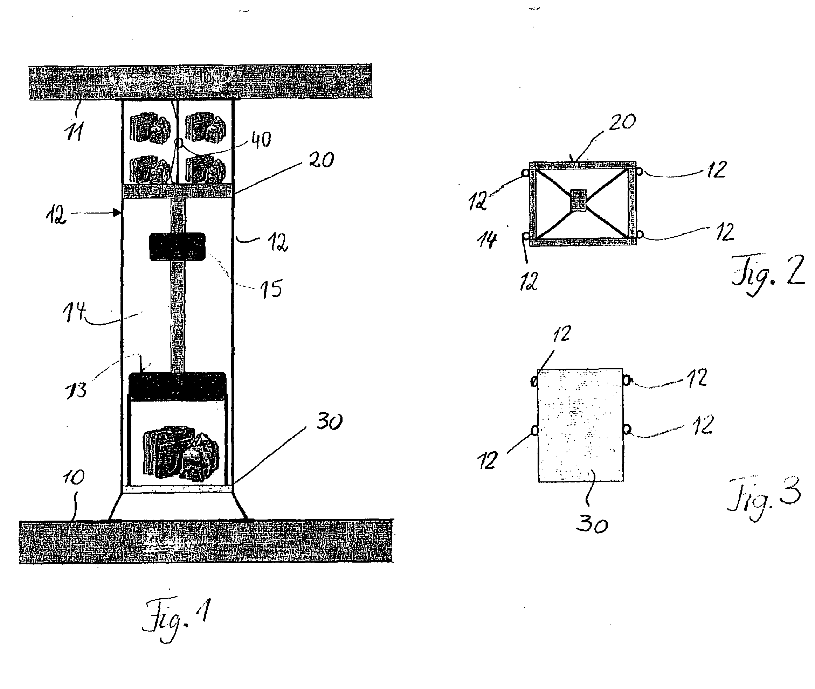

In Figur 1 ist der Boden eines Fahrzeugs gemäß der Erfindung mit 10 und das Dach entsprechend mit 11 bezeichnet. Mit 12 sind vier Seile bezeichnet, die im Wesentlichen vertikal vom Dach 11 zum Boden 10 gespannt sind, wobei die Seile im unteren Bereich etwas nach außen hervortreten.

Im Inneren des Geviert aus den Seilen 12 befindet sich ein Sitz 13 mit einem Fußteil 30 und Kopfstütze 15, die an einem Vertikalstreb befestigt ist. Es handelt sich hierbei um einen üblichen Sitz mit Lehne, Kopfstütze und Fußraste.

Der Streb 14 ist nach oben hin weitergeführt und endigt dort in einem Vierkantrahmen 20.

Sowohl im Bereich des Rahmens 20 als auch im Bereich der Fußraste 30 befinden sich Seilführungen, so dass der Sitz 13 in diesen Seilführungen und in Seilen 12 vertikal hin- und herbewegt werden könnte, wenn nicht die Seile im unteren Bereich bei 30 so festgelegt wären, dass die Gewichtskraft einer sitzenden Person dort aufgefangen werden können.

In einem Fach oberhalb des Sitzes sind Gepäckstücke genauso untergebracht wie in dem Bereich unterhalb des Sitzes.

Ebenfalls noch gezeigt ist eine Abrissverbindung 40, welche den Sitz mit dem Dach 11 verbindet, und welche so dimensioniert worden ist, dass bei einer Detonation diese mechanische Verbindung gelöst wird, so dass der Sitz nach unten hin fallen kann.

Grundsätzlich sind drei Ausführungsformen der Halterung des Sitzes denkbar.

Einerseits kann der Sitz lediglich an den Seilen gehaltert werden, und andererseits kann der Sitz lediglich an der Abrissverbindung 40 festgemacht werden. Eine Kombination dieser beiden Befestigungsmittel ist ebenfalls denkbar.

## Patentansprüche

1. Mit Sitzgelegenheiten ausgestattetes Militärpersonenfahrzeug oder -aufenthaltsraum in der Form eines Frachtcontainers für den Einsatz in Gebieten, in denen Minen oder dgl. zu befürchten sind, wobei Wände, Boden und Decke mit Mitteln ausgestattet sind, die der Druckwelle einer Detonation durch Formänderungsarbeit Energie entziehen, **dadurch gekennzeichnet, dass** eine mehrteilige Hängevorrichtung für den Sitz vorgesehen ist, die aus vier vertikal straff gespannten Seiten (12) gebildet ist, die jeweils am Dach (11) und am Boden (10) befestigt sind und am Sitz (13) oder am Fußteil (30) des Sitzes befestigt und geführt sind.
